# FASCICULE DE BREVET EUROPEEN

(11) **EP 4 363 312 B1**
(45) Date de publication et mention de la délivrance du brevet: **09.04.2025**
(21) Numéro de dépôt: 22744285.2
(22) Date de dépôt: 27.06.2022
(51) Int. Cl.: B64C 11/06, F16C 33/78, F16J 15/34

(54) **ENSEMBLE MÉCANIQUE COMPRENANT UN ROULEMENT SOUMIS À DES FORCES CENTRIFUGES ET UN AGENCEMENT D'ÉTANCHÉITÉ DU ROULEMENT**
MECHANISCHE ANORDNUNG MIT EINEM FLIEHKRAFTBELASTETEN WÄLZLAGER UND EINER DICHTUNGSANORDNUNG FÜR DAS WÄLZLAGER
MECHANICAL ASSEMBLY COMPRISING A ROLLING BEARING SUBJECTED TO CENTRIFUGAL FORCES AND A SEALING ARRANGEMENT FOR THE ROLLING BEARING

(30) Priorité: 30.06.2021 FR 2107066
(43) Date de publication de la demande: 08.05.2024
(73) Titulaire: SAFRAN AIRCRAFT ENGINES, 75015 Paris (FR)
(72) Inventeur: JACON, Bruno Alexandre Didier, 77550 MOISSY-CRAMAYEL (FR); DA SILVA, Cédric Antonio, 77550 MOISSY-CRAMAYEL (FR)
(74) Mandataire: Brevalex
(86) Numéro de dépôt international: PCT/FR2022/051267
(87) Numéro de publication internationale: WO 2023/275470

(56) Documents cités:
- WO-A1-2005/047720
- GB-A- 550 257
- US-A- 2 438 542
- US-A1- 2015 078 899

## Description

La présente invention concerne un ensemble mécanique comprenant un roulement et un agencement d'étanchéité soumis à des forces centrifuges.

Elle concerne plus précisément un tel agencement dans un ensemble mécanique tournant autour d'un axe de rotation (dit axe moteur), et dans lequel le roulement a un axe central perpendiculaire à l'axe de rotation (axe moteur), de façon que le roulement est excentré de l'axe de rotation et soumis à des forces centrifuges dans la direction perpendiculaire à l'axe de rotation. Une application particulièrement envisagée ici, mais qui n'est pas exclusive d'autres, est un roulement de pied de pale d'hélice de moteur d'aéronef, dans lequel le pied de pale pivote pour faire varier à volonté l'orientation de la pale par rapport à la direction longitudinale du moteur, qu'on appelle le calage de la pale.

Les forces centrifuges qui s'exercent sur ce roulement pendant la rotation de l'hélice sont dirigées suivant l'axe de la pale. Un joint d'étanchéité doit être ajouté pour fermer le logement du roulement du côté radialement extérieur et empêcher l'entrée d'humidité ou de particules polluantes dans le logement, et aussi pour empêcher un écoulement du lubrifiant (quelle que soit sa nature) sous l'effet des forces centrifuges. Le joint doit lui-même être retenu contre les forces centrifuges, et assurer sa fonction malgré les déformations importantes auxquelles les forces centrifuges peuvent le soumettre.

Divers agencements ont été proposés pour satisfaire à ces exigences et isoler le logement du roulement du milieu extérieur, mais ils possèdent divers inconvénients, et en général une certaine complication qui diminue leur intérêt dans une application où on cherche constamment à alléger les équipements, et où la longueur libre pour loger le joint, dans la direction axiale du roulement (axe de la pale) entre le roulement et la pale, est réduite.

L'étanchéité est souvent obtenue en comprimant le joint entre deux faces de l'agencement, concentriques dans la direction radiale d'après l'axe du roulement ou l'axe de pivotement du pied de pale ; ces faces concentriques peuvent appartenir au pied de la pale et au moyeu dans lequel le pied pivote, ou éventuellement à des prolongements des bagues du roulement. Une pièce telle qu'un écrou vissé au moyeu doit être ajoutée à l'agencement pour retenir le joint contre les forces centrifuges, ce qui est désavantageux. Un autre inconvénient est que l'insertion du joint, qui est comprimé entre les deux faces concentriques et doit être déplacé le long de ces faces, est fastidieuse quelle que soit la constitution du joint.

Le document US 2015 / 0 078 899 A1 décrit un ensemble mécanique selon le préambule de la revendication 1 comprenant un dispositif d'étanchéité où un écrou 7 de montage du roulement porte un joint d'étanchéité 21 pour créer une première étanchéité du logement contenant le roulement, et une lèvre 8 conique à l'extérieur du logement pour dévier les fuites de lubrifiant vers l'extérieur radial de l'axe du roulement.

Le document GB 550 257 A décrit un dispositif où un écrou de serrage du roulement dans son logement porte un premier joint pour établir l'étanchéité du logement, et un second joint pour établir une étanchéité autour du pied de la pale.

Le document US 2 438 542 A est caractéristique d'une des conceptions décrites précédemment, un joint d'étanchéité d'un logement d roulement étant comprimé radialement (d'après l'axe du roulement) entre l'écrou de serrage du roulement et le pied de la pale.

Un objet de l'invention est de s'affranchir de ces insuffisances et de proposer un agencement d'étanchéité, adapté à ce contexte technique, qui soit à la fois fiable, léger et peu volumineux.

D'après une définition générale, l'invention est relative à un ensemble mécanique selon la revendication 1 tournant autour d'un axe de rotation (axe moteur) et comprenant ur roulement, deux pièces de montage respectif de deux bagues du roulement, les pièces de montage formant un logement recevant le roulement, une des bagues du roulement tournant autour d'un axe central du roulement qui est perpendiculaire à l'axe de rotation, et comprenant un dispositif d'étanchéité du logement à un côté radialement extérieur d'après l'axe de rotation, caractérisé en ce que le dispositif d'étanchéité comprend :
- un premier élément d'étanchéité comprenant une bande annulaire (appelée « talon ») et une première lèvre essentiellement plane ou conique et raccordée à une portion, située radialement à l'extérieur d'après l'axe de rotation, de la bande annulaire ;
- un second élément d'étanchéité adjacent à la bande annulaire et à la première lèvre, pressant la première lèvre radialement vers l'extérieur d'après l'axe de rotation (axe moteur ou alors axialement d'après l'axe du roulement ou axe de pied de pale), contre une pièce de l'ensemble solidaire d'une seconde des bagues ;
- et une portion d'étanchéité pressant sur une face latérale d'extrémité de la première des bagues.

Des aspects originaux importants de l'invention sont donc que des portions ou lignes d'étanchéité sont créées sur des surfaces d'orientation essentiellement axiale d'après l'axe central du roulement, sans qu'une ligne d'étanchéité sur une surface d'orientation radiale soit nécessaire. Le dispositif d'étanchéité peut être introduit facilement dans le logement du roulement, car sa largeur dans la direction radiale est avantageusement plus petite que la distance radiale (d'après l'axe central) entre les deux pièces de montage, qui délimitent le logement du roulement : l'introduction se fait donc avec un jeu. Le dispositif d'étanchéité est facile à serrer dans la direction de l'axe central. Il est peu sensible aux risques d'arrachement que produiraient les forces centrifuges, grâce à son orientation et à sa légèreté. Le second élément d'étanchéité a la fonction de maintenir les lignes d'étanchéité grâce à sa compression en direction axiale d'après l'axe central (axe du roulement). Et l'agencement peut être réalisé sans devoir ajouter de pièce qui servirait seulement pour serrer ou maintenir le dispositif, qui repose sur une des bagues du roulement, et dont la première lèvre sera souvent pressée par une pièce de l'agencement déjà présente pour une autre raison dans les agencements classiques.

Le premier élément d'étanchéité est avantageusement un joint souple, c'est-à-dire qu'il de déforme beaucoup plus que les pièces environnantes, généralement métalliques, quand un effort lui est appliqué, par exemple pendant le montage de l'ensemble. Il est préférablement en polymère.

La bande annulaire du premier élément d'étanchéité est avantageusement séparée d'une paroi du logement, orientée en direction de l'axe central, par un jeu au moins à un état libre du premier élément d'étanchéité. Il est alors possible de l'introduire dans le logement sans le déformer, et donc avec facilité.

Le second élément d'étanchéité est alors avantageusement apte à exercer une déformation, orientée vers ladite paroi du logement, de ladite bande annulaire, ce qui permet de la faire adhérer à la paroi et de bloquer la position du premier élément. Il est toutefois inutile d'obtenir une étanchéité supplémentaire par ce contact, l'étanchéité du logement étant déjà assurée par les deux portions d'étanchéité mentionnées.

Le second élément d'étanchéité est lui aussi avantageusement souple, et plus précisément en matière élastique, ce qui lui permet d'exercer l'effort d'étanchéité sur les deux portions quand il a été comprimé, et éventuellement d'exercer un effort de plaquage de la bande annulaire sur la paroi en vis-à-vis. Il est un ressort dans certaines réalisations, un joint d'étanchéité dans d'autres.

D'après un mode de réalisation important, la portion d'étanchéité est une seconde lèvre essentiellement plane ou conique du premier élément d'étanchéité, et le second élément d'étanchéité est un ressort.

Il est alors avantageux que le ressort comprenne deux branches pressant respectivement sur des extrémités libres, opposées à la bande annulaire, de la première lèvre et de la seconde lèvre, et une portion de liaison des branches pressant sur la bande annulaire, les branches formant un angle s'ouvrant à partir de la portion de liaison ; ou qu'il ait une section fermée, circulaire ou elliptique.

Mais d'après un autre mode de réalisation important qui est aussi avantageux, la portion d'étanchéité appartient au second élément d'étanchéité, qui est un joint élastique à section déformable.

La première des bagues peut être aussi bien la bague intérieure que la bague extérieure de roulement ; la seconde possibilité est toutefois particulièrement envisagée.

L'invention peut équiper à peu près n'importe quel modèle de roulement, et par exemple des roulements à contact oblique offrant à la fois un support radial et un support axial ; une réalisation à noter comporte alors la première des bagues décalée radialement vers l'intérieur, d'après l'axe de rotation, par rapport à la seconde des bagues ; le dispositif d'étanchéité est alors souvent assez petit pour ne dépasser alors pas ou presque du roulement, et donc n'imposer aucune augmentation de taille du dispositif.

La pièce associée à la seconde des bagues peut elle aussi prendre des formes différentes ; elle peut par exemple être une collerette d'un bloc avec la seconde des bagues, ou un écrou de serrage de la seconde des bagues sur une seconde des pièces de montage.

Un anneau de retenue couvrant la bande annulaire, radialement à l'extérieur d'après l'axe de rotation, peut être ajouté à l'agencement si les forces centrifuges sont susceptibles d'arracher le dispositif de son logement, malgré sa légèreté.

Des pions d'arrêt en rotation du premier élément d'étanchéité, qui pénètrent dans des paires d'encoches en prolongement de la bande annulaire et de la première des pièces de montage, peuvent encore être ajoutés pour maintenir le premier élément d'étanchéité à une position angulaire immuable par rapport à cette première pièce de montage.

D'après une autre disposition avantageuse, la pièce associée à la seconde des bagues comprend une piste d'usure en contact avec la première lèvre.

Et d'après une réalisation particulièrement envisagée, l'ensemble mécanique est un rotor d'hélice à pales à calage variable, une des bagues du roulement est montée sur un pied, pivotant dans le rotor, d'une des pales, l'autre des bagues est montée dans un moyeu du rotor.

L'invention sera maintenant décrite dans ses différents aspects, caractéristiques et avantages au moyen des figures suivantes, qui en décrivent complètement certaines réalisations, non exclusives d'autres et donc données à titre purement illustratif :
- Figure 1 : vue générale d'un moteur particulier où l'invention peut être introduite ;
- Figure 2 : un détail agrandi de cette figure ;
- Figure 3 : vue générale de l'agencement et des pièces avoisinantes en coupe radiale ;
- Figure 4 : représentation, en perspective avec coupe radiale, d'une première réalisation de l'agencement ;
- Figure 5 : vue perspective du premier élément d'étanchéité ;
- Figure 6A, Figure 6B, Figure 6C, Figure 6D : quatre réalisations possibles du second élément d'étanchéité ;
- Figure 7 : représentation en coupe du dispositif, montrant la coopération entre ses deux éléments, ainsi qu'une variante de réalisation :
- Figure 8 : un autre mode de réalisation, en coupe radiale ;
- Figure 9 : représentation agrandie du dispositif de ce deuxième mode.

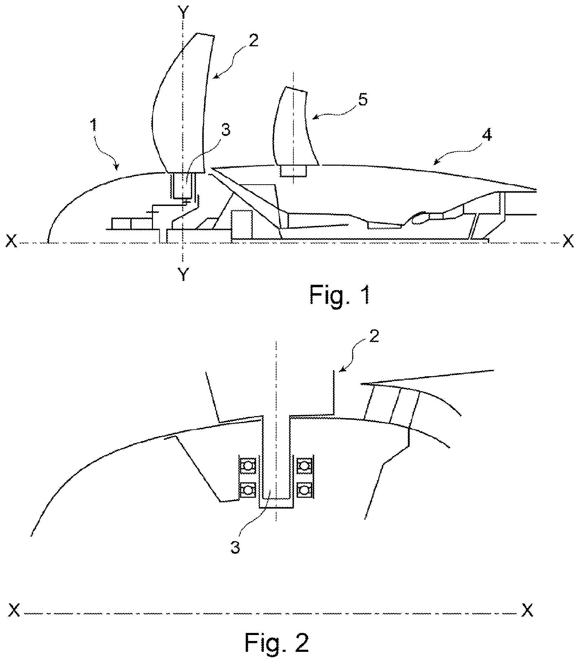

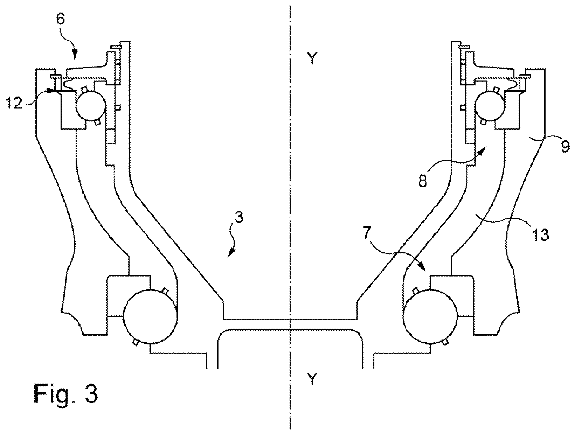

On décrira d'abord les figures 1 et 2. Elles représentent partiellement un rotor d'hélice 1 d'un moteur d'aéronef, tournant autour d'un axe de rotation X - X. L'hélice comprend un cercle de pales 2 réparties autour de l'axe de rotation X - X, et chacune des pales 2 comprend un pied 3. Le rotor d'hélice s'étend en avant d'un corps principal 4 du moteur, pouvant comprendre une roue 5 de pales à calage variable redressant le flux d'air, une chambre de combustion et des turbines de détente des gaz. D'après la figure 3, le pied 3 est soutenu dans un évidement radial 6 du rotor d'hélice 1 par l'intermédiaire de deux roulements 7 et 8, le roulement 7, plus proche de l'axe de rotation X - X, étant un roulement intérieur, et le roulement 8 étant un roulement extérieur. Les roulements 7 et 8 ont leur bague extérieure qui prend appui sur un moyeu 9 du rotor d'hélice 1, que traverse l'évidement radial 6. La pale 2 est guidée en pivotement par les roulements 7 et 8, et tourne autour de leur axe central, dit « axe central Y-Y » ci-après. L'axe central Y - Y n'est pas parallèle à l'axe de rotation X - X, mais il le croise en formant ici un angle droit, et il s'étend donc dans une direction radiale de l'axe de rotation X-X. Les pales 2 sont soumises à d'importantes forces dans la direction du pied 3, notamment des forces centrifuges quand le rotor d'hélice 1 tourne, ce qui explique que les roulements 7 et 8 soient ici à contact oblique de leurs éléments roulants, et donc aptes à résister à ces forces dans la direction de l'axe central Y - Y ; mais l'invention pourrait être appliquée à d'autres types de roulements, à billes comme ici ou à autres éléments roulants. Les rotations des pieds 3 et de l'ensemble des pales 2 en pivotement sont commandées, par exemple, par un mécanisme de réglage de calage connu en soi, à engrenages logés dans le rotor d'hélice 1.

Un dispositif d'étanchéité 12 doit être ajouté du côté radialement extérieur (d'après l'axe de rotation X - X) du roulement extérieur 8 pour empêcher aussi bien les écoulements de lubrifiant hors d'une cavité annulaire 13 contenant les roulements 7 et 8, que les entrées d'humidité ou de particules polluantes dans cette cavité 13.

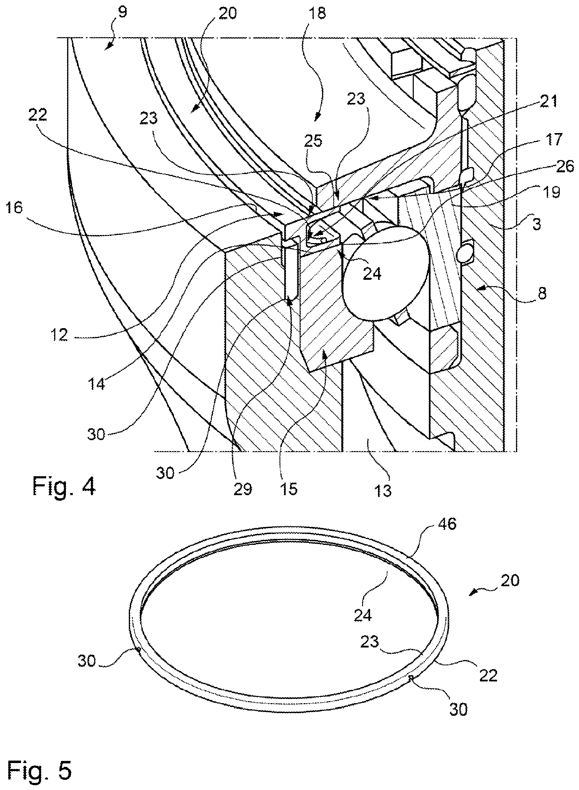

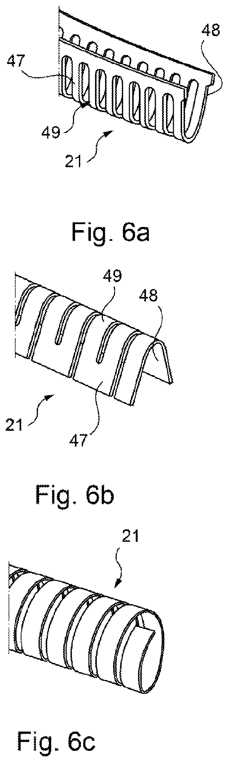

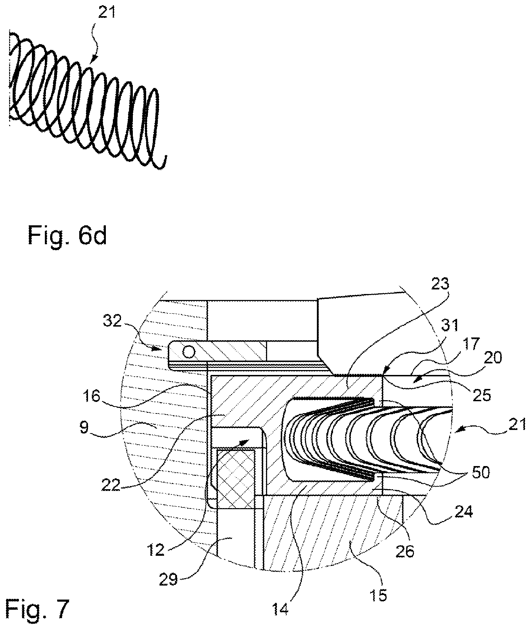

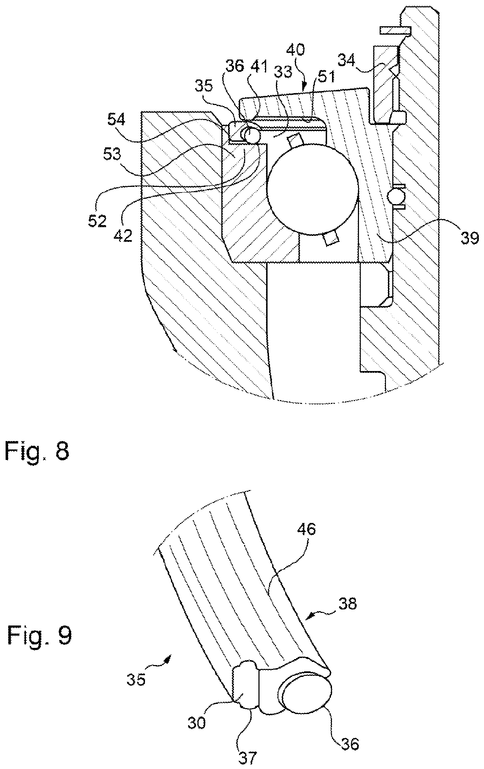

La figure 4 illustre mieux le dispositif d'étanchéité 12. Il repose sur une portée plane 14 du côté radialement extérieur (d'après l'axe de rotation X - X) d'une bague extérieure 15 du roulement extérieur 8, sur une face cylindrique 16, faisant partie de l'évidement radial 6 et située à son extrémité radialement extérieure, et sur une surface plane 17, dirigée radialement vers l'intérieur (d'après l'axe de rotation X - X), d'un écrou de serrage 18 d'une bague intérieure 19 du roulement extérieur 8. Le dispositif d'étanchéité 12 se compose d'un premier élément 20 et d'un second élément 21 travaillant en association. La portée plane 14 et la surface plane 17 sont toutes deux orientées en direction de l'axe central Y -Y, dans des sens opposés. Le premier élément 20 (figure 5) est un joint en forme d'anneau fermé le long de son pourtour, en une matière souple, en polymère par exemple, choisie aussi pour résister aux températures tour à tour chaudes et froides que subit le rotor d'hélice 1. Il est composé d'une bande annulaire 22 faisant face à la face cylindrique 16, d'une première lèvre 23 et d'une seconde lèvre 24. Les première et seconde lèvres 23 et 24 se raccordent à la bande annulaire 22 par une extrémité, s'étendent dans le même sens radial (vers l'intérieur ici) d'après l'axe central Y - Y et reposent, par leurs extrémités opposées aux raccordements, respectivement sur la surface plane 17 et sur la portée plane 14. Les lèvres 23 et 24 peuvent être essentiellement planes ou coniques, divergentes l'une de l'autre vers leurs extrémités libres. Le second élément 21 est un ressort élastique, dont la section peut être en U, en V (figures 6A et 6B) et composée de deux branches 47 et 48 divergentes en formant un angle à partir d'une portion de raccordement 49, ou à section fermée circulaire, elliptique (figures 6C et 6D), ou autre ; et la section peut être composée de spires ou d'arceaux joints successivement entre eux (figures 6B et 6D) ou par une bande de liaison qui les unit (figures 6A et 6C). D'autres constitutions du ressort sont envisageables. Le second élément d'étanchéité 21 est retenu dans le premier élément d'étanchéité par des rebords 50 dirigés l'un vers l'autre au bout des lèvres 23 et 24 (figure 7). La fonction de ce second élément 21 est de repousser les première et seconde lèvres 23 et 24 axialement (d'après l'axe central Y - Y) par appui des branches 47 et 48 sur elles en les écartant pour les maintenir sur la portée plane 14 et la surface plane 17. Le premier élément 20 forme ainsi deux portions ou lignes d'étanchéité circulaires, respectivement 25 et 26, aux extrémités libres des lèvres 23 et 24. De plus, la compression du second élément 21 obtenue au montage peut transmettre à la bande annulaire 22 un effort perpendiculaire à l'axe central Y - Y, qui la plaque contre la face cylindrique 16 appartenant au moyeu 9. Les positions des lignes d'étanchéité 25 et 26 peuvent être imposées par des arêtes 46 saillant des faces extérieures des lèvres 23 et 24 (figures 5 et 9). Mais le dispositif d'étanchéité 12 n'est au contact ni de la bague intérieure 19 du roulement extérieur 8, ni du pied 3, ni éventuellement du moyeu 9, un jeu pouvant séparer la bande annulaire 22 de la face cylindrique 6.

Les remarques qu'on peut faire sur cet agencement sont donc les suivantes. Le dispositif d'étanchéité 12 est de petites dimensions et léger. Il est donc soumis à des forces centrifuges moindres en service et plus facile à maintenir en place sans précautions particulières. Il peut être logé entièrement dans un espace déjà existant et délimité radialement (d'après l'axe de rotation X - X) par la bague intérieure 19, dans cette réalisation où elle dépasse de l'autre radialement vers l'extérieur. Il est aussi facile à installer, puisqu'il peut être introduit en laissant subsister un jeu, donc sans exercer d'effort, entre la face cylindrique 16 et la bague intérieure 19. Il n'impose aucune pièce supplémentaire dans cette réalisation, où l'écrou de serrage 18 est nécessaire pour retenir et charger le roulement extérieur 8. Et les deux lignes d'étanchéité 25 et 26, circulaires fermées et réalisées sur des surfaces planes parallèles entre elles qu'on approche progressivement l'une de l'autre en tournant l'écrou de serrage 18, donnent une étanchéité très fiable. On remarquera aussi que la bande annulaire 22 peut dépasser du moyeu 9 (dans la direction de l'axe central Y-Y).

Il peut être indiqué, pour prolonger la durée de vie du joint, limitée par les frottements, de rendre le premier élément 20 solidaire en rotation de la bague extérieure 15 et du moyeu 9. On dispose pour cela des pions 29, orientés parallèlement à l'axe central Y - Y, dans des encoches 30 en prolongement situées dans la bande annulaire 22 et dans le moyeu 9. De plus, la portion de la surface plane 17 qui forme la première ligne d'étanchéité 25 peut être pourvue d'une couche d'usure 31, représentée à la figure 7. La figure 7 illustre encore une autre variante de réalisation. Comme la plus grande partie du dispositif d'étanchéité 12 fait face à un volume vide du côté radial extérieur, un anneau de retenue 32, monté sur le moyeu 9, peut être ajouté pour couvrir au moins partiellement le dispositif d'étanchéité 12 dans le sens radial extérieur si on veut éviter avec une sécurité totale tout risque d'arrachement dû aux forces centrifuges, en acceptant alors un petit allongement du moyeu 9 vers la partie aérodynamique de la pale 2.

Un autre mode de réalisation est décrit au moyen de la figure 8. Il diffère du précédent d'abord en ce que le dispositif d'étanchéité, maintenant 33, et l'écrou de serrage, maintenant 34, ont une autre constitution. Le dispositif d'étanchéité 33 comporte encore (figure 9) un premier élément 35 et un second élément 36 d'étanchéité, mais le premier est composé seulement d'une bande annulaire 37 analogue à la bande annulaire 22 précédente, et d'une lèvre 38 analogue à la première lèvre 23 précédente ; et le second élément 36 est un joint torique élastique. Et l'écrou de serrage 34 a une faible largeur dans la direction radiale (d'après l'axe central Y - Y), de sorte qu'il ne s'étend plus jusqu'au-dessus du dispositif d'étanchéité 33. On pourvoit alors la bague intérieure, maintenant 39, d'une collerette 40 plane qui s'étend jusqu'au-dessus du second élément 36.

Les fonctions du dispositif d'étanchéité 33 sont les mêmes que précédemment : l'étanchéité se fait sur deux lignes fermées et circulaires parallèles 41 et 42, dont la première (41) est formée entre l'extrémité libre de la branche 38 et une surface inférieure 51 de la collerette 40 ; mais la seconde (42) est formée entre le second élément d'étanchéité 36 et une face plane 52 de la bague extérieure, maintenant 53. Ces lignes d'étanchéité 41 et 42 sont encore maintenues par la compression du second élément d'étanchéité 36, La bande annulaire 37 fait ici face radialement (d'après l'axe central Y - Y) contre un prolongement 54 de la bague extérieure 53 vers l'extérieur radial (d'après l'axe de rotation X - X), mais ce prolongement 54, est une caractéristique peu importante et pourrait être absent.

Dans ces modes de réalisation, une paire d'éléments d'étanchéité convenablement choisis forme deux portions ou lignes circulaires d'étanchéité autour de l'axe du roulement, une de ces portions étant présente contre une face latérale d'une des bagues du roulement, et l'autre contre une face d'une pièce de l'ensemble qui est associée à l'autre des bagues (ou qui est solidaire de cette bague), et les éléments d'étanchéité sont comprimés dans la direction de l'axe du roulement entre lesdites deux faces, orientées en sens opposés dans cette direction.

Comme les éléments d'étanchéité s'étendent d'une des bagues du roulement à une pièce solidaire de l'autre bague, ils suffisent à clore complètement le logement. Aucune étanchéité par compression dans la direction perpendiculaire à l'axe du roulement n'est nécessaire.

Les éléments d'étanchéité peuvent être introduits à un état libre dans le logement avant de continuer le montage de l'ensemble mécanique, et donc sans les difficultés de montage qui auraient pu être produites par des frottements à vaincre et des déformations résultantes d'éléments en général très souples

La coopération entre les deux éléments d'étanchéité permet d'assurer une force d'étanchéité suffisante, de maintenir de leur position correcte à la fin du montage, en évitant notamment leur extraction accidentelle sous l'effet des forces centrifuges même si une grande partie reste exposée vers l'extérieur du logement, qui peut rester ainsi plus largement ouvert. Une fonction principale du premier élément est plus précisément de couvrir le logement par rapport à l'extérieur, et une fonction principale du second élément de maintenir l'effort d'étanchéité.

Comme les éléments d'étanchéité pourront être petits et légers, les efforts centrifuges exercés sur eux seront peu importants. Et leur maintien en place pourra en général être assuré par des pièces déjà présentes dans l'agencement pour d'autres raisons, et donc sans l'alourdir.

D'autres réalisations de l'invention existent évidemment, sans qu'elles sortent de la définition de l'invention. Les différents détails décrits ici et répartis entre les deux réalisations principales pourraient être associés entre eux autrement. Le dispositif d'étanchéité pourrait aussi être disposé sur la bague intérieure du roulement, au lieu de la bague extérieure 15, comme il a été décrit dans ces réalisations particulières.

Des matériaux convenables pour le premier élément du dispositif pourraient être les PTFE avec ou sans charge, les PE-UHMW, les PEEK, les PP ou autres polymères ; le second élément pourrait être métallique (Inconel, Hastalloy, etc.) dans le premier mode principal décrit ici ; ou en VMQ, FVMQ, FKM, FFKM, ou un autre élastomère compatible avec les températures et les fluides rencontrés dans le second mode principal.

## Revendications

1. Ensemble mécanique tournant autour d'un axe de rotation (X - X) et comprenant un roulement (8), deux pièces (3, 9) de montage respectif de deux bagues du roulement (8), les pièces de montage formant un logement recevant le roulement (8), une des bagues du roulement tournant autour d'un axe central (Y - Y) du roulement qui croise l'axe de rotation (X-X), et un dispositif d'étanchéité du logement à un côté radialement extérieur d'après l'axe de rotation (X - X) comprenant :
- un premier élément d'étanchéité (20, 35) comprenant une bande annulaire (22, 37) et une première lèvre (23, 38) essentiellement plane ou conique et raccordée à une portion de la bande annulaire, située radialement à l'extérieur de la bande annulaire d'après l'axe de rotation (X-X) ;
- une portion d'étanchéité (26, 42) pressant sur une face latérale d'extrémité (14, 52) de la première des bagues (15, 44),
**caractérisé en ce que** le dispositif d'étanchéité comprend un second élément d'étanchéité (21, 36) adjacent à la bande annulaire et à la première lèvre, pressant la première lèvre (23, 38) radialement vers l'extérieur d'après l'axe de rotation (X - X), contre une pièce de l'ensemble (18, 40) solidaire d'une seconde des bagues (19, 39).

2. Ensemble mécanique selon la revendication 1, **caractérisé en ce que** le premier élément d'étanchéité est un joint souple, préférablement en polymère.

3. Ensemble mécanique selon la revendication 2, **caractérisé en ce que** la bande annulaire du premier élément d'étanchéité est séparée d'une paroi du logement, orientée en direction de l'axe central (Y - Y), par un jeu au moins à un état libre du premier élément d'étanchéité.

4. Ensemble mécanique selon la revendication 3, **caractérisé en ce que** le second élément d'étanchéité est apte à exercer une déformation, orientée vers ladite paroi du logement, de ladite bande annulaire.

5. Ensemble mécanique selon l'une quelconque des revendications 1 à 4, **caractérisé en ce que** le second élément est en une matière élastique.

6. Ensemble mécanique selon la revendication 5, **caractérisé en ce que** la portion d'étanchéité (26) est située sur une seconde lèvre (24) essentiellement plane ou conique du premier élément d'étanchéité (20), et le second élément d'étanchéité (21) est à effet ressort.

7. Agencement de roulement selon la revendication 6, **caractérisé en ce que** l'élément à effet ressort comprend deux branches (47, 48) pressant respectivement sur des extrémités libres, opposées à la bande annulaire, de la première lèvre et de la seconde lèvre, les branches formant un angle s'ouvrant à partir de la portion de liaison.

8. Ensemble mécanique selon la revendication 6, **caractérisé en ce que** l'élément à effet ressort a une section fermée, circulaire ou elliptique.

9. Ensemble mécanique selon la revendication 5, **caractérisé en ce que** la portion d'étanchéité (42) appartient au second élément d'étanchéité (36), qui est un joint élastique à section déformable.

10. Ensemble mécanique selon l'une quelconque des revendications 1 à 9, **caractérisé en ce que** la première des bagues (15, 44) est une bague extérieure, d'après l'axe central (Y - Y), du roulement (8).

11. Ensemble mécanique selon l'une quelconque des revendications 1 à 10, **caractérisé en ce que** la première des bagues est décalée radialement vers l'intérieur, d'après l'axe de rotation (X - X), par rapport à la seconde des bagues, et **en ce que** la pièce associée à la seconde des bagues est une collerette (40), d'un bloc avec la seconde des bagues.

12. Ensemble mécanique selon l'une quelconque des revendications 1 à 10, **caractérisé en ce que** la première des bagues est décalée radialement vers l'intérieur, d'après l'axe de rotation (X - X), par rapport à la seconde des bagues, et **en ce que** la pièce associée à la seconde des bagues est un écrou de serrage (18) de la seconde des bagues sur une seconde (3) des pièces de montage.

13. Ensemble mécanique selon l'une quelconque des revendications 1 à 12, **caractérisé en ce que** la première des pièces de montage comprend un anneau de retenue (32) couvrant la bande annulaire, radialement à l'extérieur d'après l'axe de rotation (X - X).

14. Ensemble mécanique selon l'une quelconque des revendications 1 à 13, **caractérisé en ce que** la pièce associée à la seconde des bagues comprend une piste d'usure (31) en contact avec la première lèvre.

15. Ensemble mécanique selon l'une quelconque des revendications 1 à 14, **caractérisé en ce que** l'ensemble mécanique est un rotor (1) d'hélice à pales (2) à calage variable, une des bagues du roulement est montée sur un pied (3), pivotant dans le rotor, d'une des pales, l'autre des bagues est montée dans un moyeu (9) du rotor.

## Patentansprüche

1. Mechanische Baugruppe, die sich um eine Drehachse (X-X) dreht und ein Lager (8), zwei jeweilige Montagebauteile (3, 9) für zwei Ringe des Lagers (8), wobei die Montagebauteile ein Gehäuse bilden, das das Lager (8) aufnimmt, wobei sich einer der Ringe des Lagers um eine Mittelachse (Y-Y) des Lagers dreht, die die Drehachse (X-X) schneidet, und eine Abdichtungsvorrichtung für das Gehäuse in Bezug auf die Drehachse (X-X) auf einer radial äußeren Seite umfasst, das Folgendes umfasst:
- ein erstes Dichtungselement (20, 35), das einen ringförmigen Streifen (22, 37) und eine im Wesentlichen ebene oder konische erste Lippe (23, 38) umfasst, die mit einem Abschnitt des ringförmigen Streifens verbunden ist und sich in Bezug auf die Drehachse (X-X) radial außerhalb des ringförmigen Streifens befindet;
- einen Dichtungsabschnitt (26, 42), der auf eine seitliche Endfläche (14, 52) des ersten der Ringe (15, 44) drückt,
**dadurch gekennzeichnet, dass** die Abdichtungsvorrichtung ein zweites Dichtungselement (21, 36) umfasst, das neben dem ringförmigen Streifen und der ersten Lippe liegt und die erste Lippe (23, 38) in Bezug auf die Drehachse (X-X) radial nach außen gegen ein Bauteil der Baugruppe (18, 40) drückt, das fest mit einem zweiten der Ringe (19, 39) verbunden ist.

2. Mechanische Baugruppe nach Anspruch 1, **dadurch gekennzeichnet, dass** das erste Dichtungselement eine flexible Dichtung, vorzugsweise aus Polymer, ist.

3. Mechanische Baugruppe nach Anspruch 2, **dadurch gekennzeichnet, dass** der ringförmige Streifen des ersten Dichtungselements zumindest in einem freien Zustand des ersten Dichtungselements von einer in Richtung der Mittelachse (Y-Y) ausgerichteten Gehäusewand durch einen Abstand getrennt ist.

4. Mechanische Baugruppe nach Anspruch 3, **dadurch gekennzeichnet, dass** das zweite Dichtungselement dazu geeignet ist, eine in Richtung der Gehäusewand ausgerichtete Verformung des ringförmigen Streifens auszuüben.

5. Mechanische Baugruppe nach einem der Ansprüche 1 bis 4, **dadurch gekennzeichnet, dass** das zweite Element aus einem elastischen Material besteht.

6. Mechanische Baugruppe nach Anspruch 5, **dadurch gekennzeichnet, dass** sich der Dichtungsabschnitt (26) auf einer im Wesentlichen ebenen oder konischen zweiten Lippe (24) des ersten Dichtungselements (20) befindet und das zweite Dichtungselement (21) eine Federwirkung hat.

7. Lageranordnung nach Anspruch 6, **dadurch gekennzeichnet, dass** das Element mit Federwirkung zwei Schenkel (47, 48) umfasst, die jeweils auf dem ringförmige Streifen gegenüberliegende freie Enden der ersten Lippe und der zweiten Lippe drücken, wobei die Schenkel einen sich vom Verbindungsabschnitt aus öffnenden Winkel bilden.

8. Mechanische Baugruppe nach Anspruch 6, **dadurch gekennzeichnet, dass** das Element mit Federwirkung einen geschlossenen, kreisförmigen oder elliptischen Querschnitt aufweist.

9. Mechanische Baugruppe nach Anspruch 5, **dadurch gekennzeichnet, dass** der Dichtungsabschnitt (42) zu dem zweiten Dichtungselement (36) gehört, das eine elastische Dichtung mit einem verformbaren Querschnitt ist.

10. Mechanische Baugruppe nach einem der Ansprüche 1 bis 9, **dadurch gekennzeichnet, dass** der erste der Ringe (15, 44) in Bezug auf die Mittelachse (Y-Y) des Lagers (8) ein Außenring ist.

11. Mechanische Baugruppe nach einem der Ansprüche 1 bis 10, **dadurch gekennzeichnet, dass** der erste der Ringe gegenüber dem zweiten der Ringe in Bezug auf die Drehachse (X-X) radial nach innen versetzt ist und dass das dem zweiten der Ringe zugeordnete Bauteil ein einstückig mit dem zweiten der Ringe ausgebildeter Kragen (40) ist.

12. Mechanische Baugruppe nach einem der Ansprüche 1 bis 10, **dadurch gekennzeichnet, dass** der erste der Ringe gegenüber dem zweiten der Ringe in Bezug auf die Drehachse (X-X) radial nach innen versetzt ist und dass das dem zweiten der Ringe zugeordnete Bauteil eine Spannmutter (18) für den zweiten der Ringe auf einem zweiten (3) der Montagebauteile ist.

13. Mechanische Baugruppe nach einem der Ansprüche 1 bis 12, **dadurch gekennzeichnet, dass** das erste der Montagebauteile einen Haltering (32) umfasst, der den ringförmigen Streifen in Bezug zur Drehachse (X-X) radial nach außen hin abdeckt.

14. Mechanische Baugruppe nach einem der Ansprüche 1 bis 13, **dadurch gekennzeichnet, dass** das dem zweiten der Ringe zugeordnete Bauteil eine mit der ersten Lippe in Kontakt stehende Verschleißspur (31) umfasst.

15. Mechanische Baugruppe nach einem der Ansprüche 1 bis 14, **dadurch gekennzeichnet, dass** die mechanische Baugruppe ein Propellerrotor (1) mit variabel verstellbaren Blättern (2) ist, wobei einer der Lagerringe an einem im Rotor schwenkbar gelagerten Fuß (3) eines der Blätter montiert ist und der andere der Ringe in einer Nabe (9) des Rotors montiert ist.

## Claims

1. A mechanical assembly rotating around an axis of rotation (X-X) comprising a rolling bearing (8), two parts (3, 9) for respectively mounting two rings of the rolling bearing (8), the mounting parts forming a housing receiving the rolling bearing (8), one of the rings of the rolling bearing rotating around a central axis (Y-Y) of the rolling bearing which intersects the axis of rotation (X-X), and a sealing device for the housing on a radially outer side with respect to the axis of rotation (X-X) comprising:
• a first sealing element (20, 35) comprising an annular strip (22, 37) and a first lip (23, 38) which is essentially planar or conical and connected to a portion of the annular strip, located radially outside of the annular strip with respect to the axis of rotation (X-X);
• a second sealing element (21, 36) adjacent to the annular strip and to the first lip, pressing the first lip (23, 38) radially outwards with respect to the axis of rotation (X-X), against a part of the assembly (18, 40) integral with a second of the rings (19, 39);
• and a sealing portion (26, 42) pressing on a lateral end face (14, 52) of the first of the rings (15, 44).

2. The mechanical assembly according to claim 1, **characterized in that** the first sealing element is a flexible seal, preferably made of polymer.

3. The mechanical assembly according to any one of claims 1 to 2, **characterized in that** the second element is made of a resilient material.

4. The mechanical assembly according to claim 3, **characterized in that** the annular strip of the first sealing element is separated from a wall of the housing, oriented in the direction of the central axis (Y-Y), by a clearance at least in a free state of the first sealing element.

5. The mechanical assembly according to claim 4, **characterized in that** the second sealing element is capable of exerting a deformation, oriented towards said wall of the housing, of said annular strip.

6. The mechanical assembly according to claim 5, **characterized in that** the sealing portion (26) is located on a second lip (24) which is essentially planar or conical of the first sealing element (20), and the second sealing element (21) has a spring effect.

7. A bearing arrangement according to claim 6, **characterized in that** the spring effect element comprises two branches (47, 48) pressing respectively on free ends, opposite the annular strip, of the first lip and the second lip, the branches forming an angle opening from the connecting portion.

8. The mechanical assembly according to claim 6, **characterized in that** the spring effect element has a closed, circular or elliptical section.

9. The mechanical assembly according to claim 5, **characterized in that** the sealing portion (42) belongs to the second sealing element (36), which is a resilient seal with a deformable section.

10. The mechanical assembly according to any one of claims 1 to 9, **characterized in that** the first of the rings (15, 44) is an outer ring, according to the central axis (Y-Y), of the rolling bearing (8).

11. The mechanical assembly according to any one of claims 1 to 10, **characterized in that** the first of the rings is offset radially inwards, according to the axis of rotation (X-X), relative to the second of the rings, and **in that** the part associated with the second of the rings is a collar (40), made integrally with the second of the rings.

12. The mechanical assembly according to any one of claims 1 to 10, **characterized in that** the first of the rings is offset radially inwards, according to the axis of rotation (X-X), relative to the second of the rings, and **in that** the part associated with the second of the rings is a nut (18) for tightening the second of the rings on a second (3) of the mounting parts.

13. The mechanical assembly according to any one of claims 1 to 12, **characterized in that** the first of the mounting parts comprises a retaining ring (32) covering the annular strip, radially outwards according to the axis of rotation (X-X).

14. The mechanical assembly according to any one of claims 1 to 13, **characterized in that** the part associated with the second of the rings comprises a wear track (31) in contact with the first lip.

15. The mechanical assembly according to any one of claims 1 to 14, **characterized in that** the mechanical assembly is a propeller rotor (1) with variable-pitch blades (2), one of the bearing rings is mounted on a root (3), pivoting in the rotor, of one of the blades, the other of the rings is mounted in a hub (9) of the rotor.
